# EUROPEAN PATENT SPECIFICATION

(11) **EP 3 744 775 B1**
(45) Date of publication and mention of the grant of the patent: **02.12.2026**
(21) Application number: 20177110.2
(22) Date of filing: 28.05.2020
(51) Int. Cl.: C08K 5/11, C08K 5/12, C08L 27/06, A61J 1/14, A01N 1/146, A61J 1/10, B32B 27/30, B32B 27/08

(54) **BLOOD STORAGE CONTAINERS MADE OF POLYVINYL CHLORIDE AND MIXED PLASTICIZERS**
BLUTVORRATSBEHÄLTER AUS POLYVINYLCHLORID UND GEMISCHTEN WEICHMACHERN
RÉCIPIENTS DE STOCKAGE DE SANG EN CHLORURE DE POLYVINYLE ET PLASTIFIANTS MIXTES

(30) Priority: 30.05.2019 US 201962854814 P
(43) Date of publication of application: 02.12.2020
(73) Proprietor: Fenwal, Inc., Lake Zurich, IL 60047 (US)
(72) Inventor: SANDFORD, Craig L., Lake Zurich, IL Illinois 60047 (US)
(74) Representative: Maikowski & Ninnemann Patentanwälte Partnerschaft mbB

(56) References cited:
- WO-A1-2015/147300
- US-A- 5 454 806
- US-A1- 2014 276 527
- US-A1- 2017 172 847
- US-B2- 9 993 389
- YUJI HAISHIMA ET AL: "Screening study on hemolysis suppression effect of an alternative plasticizer for the development of a novel blood container made of polyvinyl chloride", JOURNAL OF BIOMEDICAL MATERIALS RESEARCH PART B: APPLIED BIOMATERIALS, vol. 102, no. 4, 1 May 2014 (2014-05-01), pages 721 - 728, XP055127428, ISSN: 1552-4973, DOI: 10.1002/jbm.b.33052

## Description

### Field of the Disclosure

The present disclosure is directed to containers for the storage of blood or blood components. More particularly, the present disclosure is directed to flexible containers that are made in whole or in part of polyvinyl chloride (or a non-PVC polyolefin blend) and a mixture of at least two plasticizers. Even more particularly, the present disclosure is directed to flexible containers wherein the mixture of plasticizers exhibit a controlled leaching and suppress hemolysis in the blood cells stored therein.

### Background

Whole blood is commonly collected and separated into its components such as red blood cells, platelets and plasma for later transfusion to a patient in need of the particular blood component. For example, red blood cells (hereinafter "RBCs") may be administered to a patient suffering from a loss of blood due to trauma, as a post-chemotherapy treatment, or as part of a treatment of one or more blood borne diseases, such as certain anemias and the like. Unless administered immediately after collection from a donor, RBCs must typically be stored for some period of time prior to transfusion. The storage period may be anywhere from a few days to several weeks.

Prolonged storage of RBCs can (negatively) affect RBC function. In order for the RBCs to be suitable for transfusion to the recipient, RBCs must maintain adequate cell function and metabolism. For example, RBCs must maintain an adequate concentration of adenosine triphosphate (ATP) and 2, 3-DPG. In addition, the presence of lactate must not be too high in the stored RBCs. Still further, stored RBCs must have acceptably low levels of hemolysis. Hemolysis refers to the rupturing of the RBC membrane, believed to be caused by the oxidation of phospholipids in the cell membrane. Typically, an acceptable level of hemolysis is below 1.0% (in, for example, the U.S.) and 0.8% (in Europe) after 42 day storage. More preferably, an acceptable level of hemolysis in stored RBCs may be below 0.4%.

During storage, concentrated RBCs and the additive solutions in which they are stored are typically kept in a sealed container, usually made of a plastic (polymeric) material. Most typically, the containers approved for the collection of whole blood and the storage of RBCs are made of a polyvinyl chloride (PVC). Inasmuch as polyvinyl chloride can be somewhat rigid or brittle, a plasticizer is typically incorporated into the PVC. One example of a currently known and used plasticizer for medical grade PVC is di-ethylhexyl phthalate ester or DEHP. Other plasticizers that have been used with PVC or other polyolefin materials include TEHTM, and the family of citrate esters described in U.S. Patent No. 5,026,347.

As reported in U.S. Patent No. 5,026,347 and other literature, such as Rock, et al. "Incorporation of plasticizer into red cells during storage," Transfusion, 1984; Horowitz et al. "Stabilization of RBCs by the Plasticizer, Di (ethylhexyl)phthalate," Vox Sarguinis, 1985, certain plasticizers may have a beneficial effect on the storage life of RBCs. More particularly, plasticizers such as DEHP have been found to suppress hemolysis of RBCs stored in containers that include such leachable plasticizers. More recently, certain non-DEHP plasticizers have been found to provide hemolysis suppression in RBCs. U.S. Patent No. 9,993,389 discloses plastic containers plasticized with 1,2 -cyclohexanedicarboxylic acid diisononyl ester (or DINCH), a leachable plasticizer, for the storage of red blood cells with acceptable hemolysis levels.

U.S. Patent Publication No. 2014/0276527discloses plastic containers plasticized with di-2-ethylhexyl terephthalate ester, also a leachable plasticizer.

US Publication No. 2017/0172847, discloses the previously mentioned DINCH and DEHT esters as well as certain citrate esters that may be suitable plasticizers for PVC containers for the storage of blood components, such as RBCs.

While DEHP plasticized containers have worked well for the storage of red cells, the use of other container materials that assist in providing a suitable storage environment for red blood cells remains a topic of keen interest. Thus, it would be desirable to provide a container that includes a suitable mixture of plasticizers that, while leachable (extractable), are leachable to an acceptable degree and still provide the beneficial hemolysis-inhibiting properties of DEHP or other single plasticizers.

### Summary

The present disclosure is directed to polymeric compositions useful in the manufacture of containers for the storage of blood components. The polymeric compositions include two or more primary plasticizers in a mixture that provides a controlled leaching of the plasticizers from the container wall surface and suppresses the hemolysis of red blood cells. Different mixed primary plasticizer systems may be used in the polymeric composition and the containers made therefrom. As used herein, the term "primary plasticizer" excludes epoxidized oils but includes all other fluids that effect the glass transition of the PVC.

In one aspect according to the invention, the present disclosure is directed to a flexible blood storage container comprising a pair of walls defining an interior chamber and at least one access port. The container is made of a polymeric material including polyvinyl chloride and a mixture of at least two extractable primary plasticizers including at least about 95% (of the total primary plasticizer content) 1, 2 - cyclohexanedicarboxylic acid diisononyl ester and up to about 5% (of the total primary plasticizer content) acetyl tri-n-butyl citrate.

In another aspect according to the invention, the present disclosure is directed to a flexible blood storage container including a pair of walls defining an interior chamber and at least one access port. The container is made of a polymeric material including polyvinyl chloride and a mixture of least two extractable primary plasticizers including at least about 75% (of the total primary plasticizer content) di-2-ethylhexyl terephthalate ester and up to about 25%(of the total primary plasticizer content) acetyl tri-n-butyl citrate . As in the above-described aspect, the stated percentages represent the percentage of the plasticizer present based on the total primary plasticizer content).

In a further aspect, the present disclosure is directed to a flexible blood storage container including a pair of walls defining an interior chamber and at least one access port. The container is made of a polymeric material including polyvinyl chloride and a mixture of least two extractable primary plasticizers 1, 2-cyclohexanedicarboxyylic acid diisononyl ester and di-2-ethylhexyl terephthalate ester.

In still a further aspect, the present disclosure is directed to a flexible blood storage container including a pair of walls defining an interior chamber and at least one access port. The container is made of a polymeric material including polyvinyl chloride and a mixture of least two extractable primary plasticizers comprising di-2-ethylhexyl terephthalate ester and acetyl tri-n-hexyl citrate.

In another aspect, the present disclosure is directed to a flexible blood storage container including a pair of walls defining an interior chamber and at least one access port. The container is made of a polymeric material comprising polyvinyl chloride and a mixture of least two extractable primary plasticizers including di-2-ethylhexyl terephthalate ester and butyl tri-n- hexyl citrate.

### Brief Description of the Drawings

Figure 1 is a front view of a typical RBC storage container used for storing the RBC suspensions and/or compositions described herein; and
Figure 2 is a side view of the container of Fig. 1;
Figure 3 shows examples of the RF welded plasticizer-supplemented PVC strips used in certain bag studies;
Figure 4 (4A) is a graph showing hemolysis for RBCs stored for 42 days in blood storage media containing specific concentrations of a variety of individual plasticizers;
Figure 5 is a graph showing the levels of hemolysis for RBCs stored for 42 days in blood storage media containing specific total primary plasticizer concentrations of a variety of mixed plasticizers with different plasticizer mix ratios described herein; and
Figure 6 is a graph showing the levels of hemolysis for RBCs stored for 42 days in blood storage media containing specific total primary plasticizer concentrations of a variety of mixed plasticizers with different plasticizer mix ratios described herein.

### Detailed Description of the Embodiments

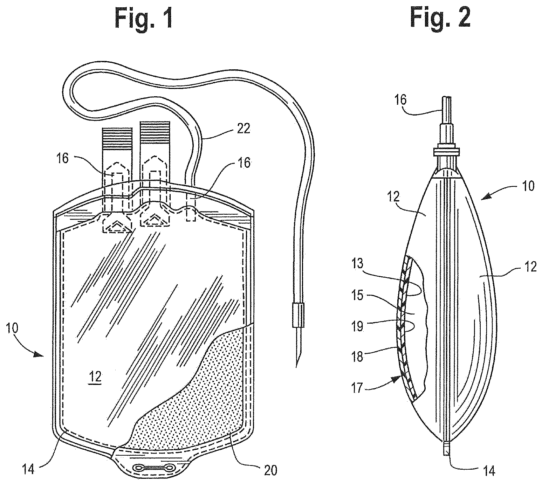

As indicated above, the containers described herein may be suitable for the long term storage of RBCs or for the collection and storage of whole blood or other components such as platelets and plasma. Preferably, containers for storing the RBC compositions disclosed herein are made of a polymeric material. The containers may be permeable to oxygen or at least semi-permeable to oxygen. As shown in Figs. 1 and 2, container 10 may include one or more container walls 12 which define an interior chamber 15 for receiving the blood or blood component 20. In one embodiment, two sheets made of a polymeric material (such as PVC plasticized in accordance with the mixed plasticizer systems disclosed herein) are brought together and sealed along their peripheries 14 by, for example, heat sealing (e.g., RF) to form container 10. Other ways of making container 10 will be known to those of skill in the art and are within the scope of the present disclosure.

As shown in Fig. 2, container wall 12 includes an outer surface 17 and an inner surface 13 which contacts the blood component stored in the container. The container wall may be a single-layered sheet of the polymeric composition described herein. Alternatively, in one embodiment, container wall 12 may be made of a multiple sheet laminate wherein inner surface 13 is made of one material and outer surface 17 is made of a different material. In an embodiment, inner surface or inner sheet of a laminate may be made of PVC plasticized with a mixed plasticizer system as described herein, while outer surface 17 (or sheet) may be made of a different material. In either embodiment, container 10 may include one or more access ports 16 for connection with tubing 22, docking devices and the like to establish flow into and out from the interior chamber 15 of container 10. Access ports 16 and/or tubing 22 may likewise be made of a PVC material plasticized with a mixed plasticizer system of the type described herein. Alternatively, tubing 22 and access ports 16 may be made of PVC plasticized with a single plasticizer or a blend of leaching and/or non-leaching plasticizers.

By way of example only, and not limitation, containers of the type described herein may have a container sheet (wall) thickness of between approximately 0.010 to 0.018 inches. The sheets may include a non-smooth or any surface finish that minimizes sheet sticking. Typically, containers of the type described herein may have a container volume (i.e., interior chamber volume) of approximately 150 ml to 4 L. The containers of the present disclosure are preferably sterilized by autoclaving and such autoclavable containers may typically have a 70-85 durometer (Shore A).

The polymeric material that makes up the container walls and, optionally, ports and/or tubing that interconnects the containers of fluid circuit may be preferably made from or otherwise include polyvinyl chloride that has been plasticized with a mixture of plasticizers as will be described in greater detail below. Preferably, the polymeric materials with a mixture of plasticizers described below are used at least in the walls of the storage container and specifically the interior surfaces of the walls that are in contact with the blood product or component. As previously described, selected plasticizers have been found to leach from the polymeric material of the walls into the stored blood component or blood product and provide support to the cellular membrane and further, in the case of red blood cells, suppress hemolysis of the red blood cells. Plasticizers must be compatible with the PVC or the non-PVC material. For non-PVC polymers, the level of plasticizer required may be much lower than for PVC as the hemolysis reduction is, in part, related to the amount of plasticizer that leaches from the polymer and not strictly the amount of plasticizer contained in the polymer. Desired leaching levels into the blood may be in the range of 5 to 50 ppm after 42 day RBC storage at 2 to 8 °C.

Ideally, the mixture of plasticizers may have a leaching rate and an anti-hemolytic effect comparable to DEHP -- the best known and currently most widely used plasticizer in blood bag applications. DEHP (di-2-ethylhexylphthalate) is the diester of phthalic acid and the branched-chain 2-ethylhexanol. Polymeric compositions made from PVC plasticized with DEHP as the primary plasticizer provide hemolysis suppression at low leaching levels.

Other plasticizers have been found to provide hemolysis suppression in red blood cells through leaching from container walls made of a polymeric material, typically but not exclusively, PVC. One such plasticizer is 1,2-cyclohexane dicarboxylic acid diisononyl ester or "DINCH." DINCH is commercially available from e.g. BASF (Ludwigshafen, Germany under the product name Hexamoll^{®}.) PVC formulations plasticized with DINCH for use in blood storage containers are disclosed in U.S. Patent No. 9,993,389, assigned to the assignee of the present application, and U.S. Patent Application Publication No.: 2017/0172847.

A further alternative plasticizer that has also been found to suppress hemolysis in red blood cells is the terephthalate ester, di-2-ethyl hexyl terephthalate or DEHT (also referred to as di-octyl terephthalate ester or DOTP). DEHT is commercially available from Eastman Chemical Co. (Kingsport, Tenn., USA under the product name Eastman 168). PVC formulations plasticized with DINCH for use in blood storage containers are disclosed in U.S. Patent Application Publication 2014/0276527 assigned to the assignee of the present application, and U.S. Patent Application Publication No.: 2017/0172847.

Still other plasticizers that are capable of suppressing hemolysis in red blood cells are those in the family of citrate esters. Preferred examples of citrate esters include acetyl tributyl citrate (ATBC), acetyl trihexyl citrate (ATHC), and butyryl trihexyl citrate (BTHC), ATBC and BTHC being most preferred. These citrate esters are available from e.g. Vertellus Specialties Inc (Parsippany, N.J., USA; product names Citroflex^{®} A4, A6, or B6). Use of certain citrate esters (in combination with other leaching plasticizers) in blood storage containers is disclosed in the aforementioned U.S. Patent No. 9,993,389, U.S. Patent Application Publication 2014/0276527 and U.S. Patent Application Publication No.: 2017/0172847.

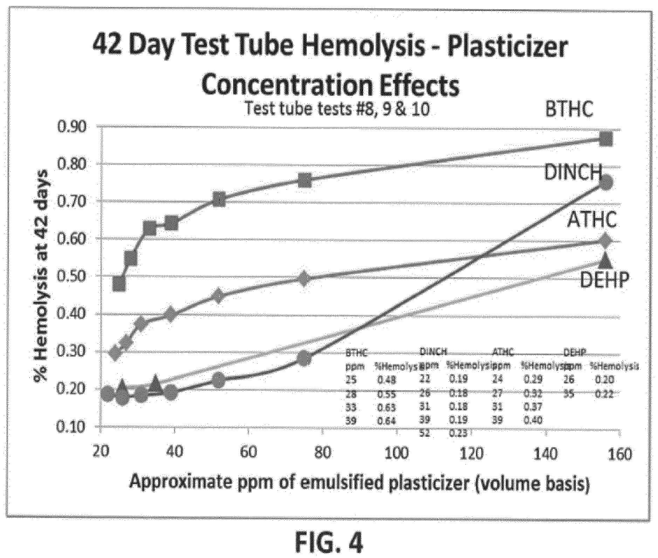

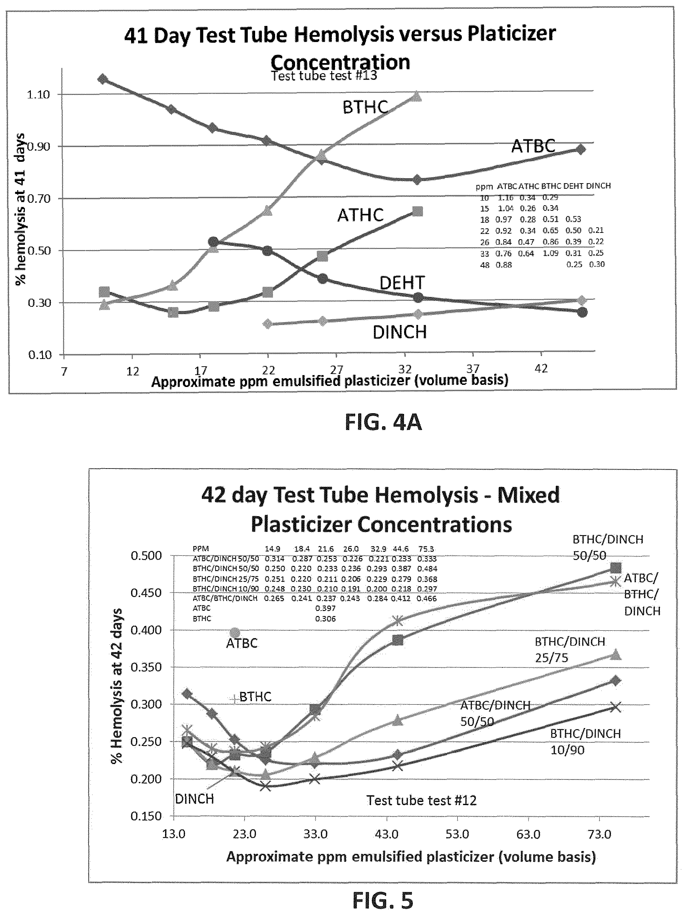

As mentioned above and as shown in Fig. 4 and 4A, these plasticizers are effective in suppressing hemolysis in red blood cells albeit to varying degrees and have different leaching profiles. It is desirable for stored RBCs to have a 42 day average storage hemolysis level below 0.4% (to ensure individual bags meet the regulatory requirements). Studies performed with different plasticizers (44 to 58 phr primary plasticizer) resulted in the following hemolysis results:

| Primary plasticizer | Average percent 42 day storage hemolysis |
|---|---|
| DEHP | 0.28 |
| DINCH (3 trials) | 0.40, 0.63, 0.52 |
| ATBC | 0.50 |
| BTHC | 0.35 |
| ATHC | 0.44 |
| 20% ATBC / 80% DINCH (3 trials) | 0.32, 0.22, 0.35 |
| 20% ATBC / 80% DEHT | 0.32, 0.33 |

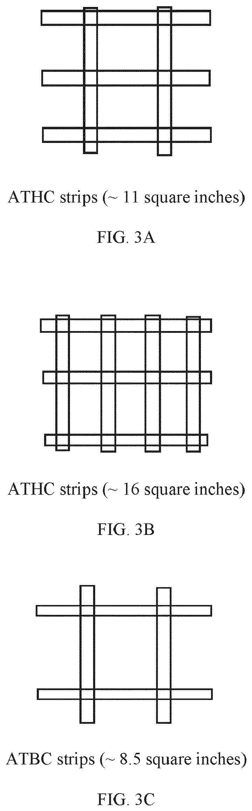

Mixed plasticizer testing was also performed by inserting RF welded plasticizer-supplemented PVC strips into PVC bags. A different number of strips were used in order to achieve different surfaces of plasticizer to be leached into a suspension of red blood cells. The strip designs chosen are shown in Fig. 3A-3C and the plasticizer system used for these strip studies were DINCH-ATBC and DINCH-ATHC as set forth in the Table below. In the case of BTHC as plasticizer, a mixture of DINCH and BTHC was also evaluated. The results from these tests can be summarized as follows:

| | 42 day % hemolysis screening | | 42 day % hemolysis screening | | | 42 day % hemolysis |
|---|---|---|---|---|---|---|
| Pool group | DINCH | DINCH/ATBC 8.5 sq in | DINCH | DINCH/ATHC 11 sq in | DINCH/ATRC 16 sq in | BTHC / DINCH |
| Type | control | | control | | | |
| 1 | 0.62 | 0.38 | 0.6 | 0.29 | 0.32 | |
| 2 | 0.41 | 0.26 | 0.47 | 0.33 | 0.31 | |
| 3 | 0.49 | 0.17 | 0.46 | 0.3 | 0.3 | |
| 4 | 0.34 | 0.17 | 0.4 | 0.27 | 0.25 | |
| **Average** | **0.465** | **0.245** | **0.48** | **0.3** | **0.3** | **0.333** |

To further demonstrate the hemolysis suppressing properties of different plasticizers, a study was also conducted whereby different individual plasticizers were combined with leukoreduced red blood cells and stored in polypropylene test tubes for 42 days. The procedure for these hemolysis tests are briefly described below.

### HEMOLYSIS TEST TUBE STUDY

This test-tube study described below allows prediction of the hemolysis effects of various additives during blood storage employing very small quantities of blood. The results of this test are predictive. For example, in the case of plasticizer additives, the concentration of plasticizer in RBCs stored in bags will increase over the length of storage time and will generally always reach a similar final concentration. In the case of the test tube test the plasticizer is added to whatever level desired at the beginning of the test and is constant throughout the test. In addition, it will be understood that different plasticizers will leach at different rates. As a result, the concentration of plasticizer in the blood during a bag storage test may be more difficult to predict and will be different from the plasticizer concentration in the sheeting of the bag. Finally, the test tube test can evaluate many different additives with blood from a single donor. Hemolysis is known to vary from donor to donor. This test allows the prediction of storage hemolysis trends with different plasticizer mixtures and concentrations.

Emulsions were prepared by mixing equal amounts of Tween 80 and each of the plasticizers tested, namely, DINCH, DEHT, ATBC, BTHC, ATHC. 100 µl of an emulsion was added to an amount of 0.9% saline in sterile bottles. The amount of 0.9 % saline included, 70ml, 95 ml, 120 ml, 145 ml, 170 ml, 210 ml and 320 ml. The tubes were capped and shaken to form stable emulsions which were then stored in a refrigerator until time of use. For each emulsion, a 400µL aliquot was transferred into two 15mL polypropylene test tubes. Six (6) mL of well-mixed CPD/Adsol red blood cells were introduced into each test tube with the emulsion aliquot. The tubes were capped and inverted to mix. As a control, two 15 mL polypropylene test tubes containing 6.4 mL each of the well-mixed CPD/Adsol RBCs were prepared. Approximately 5 mL from the RBC unit were sampled and analyzed for total hemoglobin (g/dL), spun hematocrit (%), and plasma hemoglobin (mg/dL), per standard operating procedures. The test tubes were stored at 2°C-8°C for 42 days.

On day 42, samples from each of the first test tube of each emulsion/control from each set were collected. Testing for total hemoglobin (g/dL), spun hematocrit (%), and plasma hemoglobin (mg/dL) were carried out per standard operating procedures. Plasma hemoglobin (PLH) was analyzed and percent hemolysis was calculated.

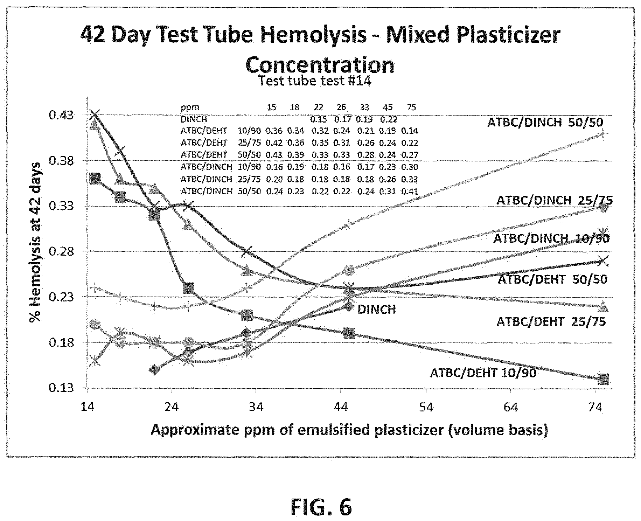

Test tube studies of the type described above were also conducted using mixed plasticizer systems. Figures 5 and 6 demonstrate that unexpectedly at the same total plasticizer concentration mixed plasticizers can have lower hemolysis than both individual plasticizers (i.e. the anti-hemolytic effect of plasticizers can be synergistic when plasticizers are mixed).

Thus, in accordance with the present disclosure, it may be desirable to combine or mix two or more plasticizers with the polymer such as, but limited to, PVC. A mixed plasticizer system may allow for better control over leaching and the amount of plasticizer in the RBCs than with a single plasticizer, while still maintaining hemolysis suppression that is comparable to established plasticizers, such as DEHP-plasticized formulations/compositions. Mixed plasticizer systems may also help reduce costs and improve processing, sealing and/or allow for different forms of sterilization. Mixed plasticizer systems may also allow for storage of whole blood and blood components other than red blood cells wherein the particular ratio of plasticizers can be tailored to the storage needs of the component and even to particular groups of donors. Selecting plasticizers with different rates of leaching allows modifying the rate at which plasticizers leach into the blood. Reducing the plasticizer leaching rate may also prevent the plasticizer concentration from being too high or too low in the blood.

Polymeric compositions with mixed plasticizer systems in accordance with the present disclosure include, but are not limited to, mixtures of ATBC/DINCH, BTHC/DINCH, ATBC/DEHT, DEHT/DINCH, DEHT/ATHC, and DEHT/BTHC. More particularly, mixed plasticizer systems in accordance with the present disclosure may include a mixture of 22% or less ATBC with 78% or more DINCH, a mixture of 25% or less ATBC with 75% or more DEHT, a mixture of DEHT and DINCH, a mixture of DEHT and ATHC, a mixture of DEHT and BTHC. The percentages expressed above represent a percentage of the total plasticizer content. In a preferred embodiment, the total plasticizer content as a percentage of the total polymeric composition may be between about 20%-45%, by weight, and more preferably 28%-38%, by weight.

In still more specific embodiments, the polymeric compositions may include a mixture of extractable plasticizers of at least 75% 1, 2 cyclohexanedicarboxyylic acid diisononyyl ester and up to 25% acetyl tri-n-butyl citrate; a mixture of at least 85% 1, 2 cyclohexanedicarboxyylic acid diisononyyl ester and up to 15% acetyl tri-n-butyl citrate; a mixture of extractable plasticizers of at least 90% 1, 2 cyclohexanedicarboxyylic acid diisononyl ester and up to 10 % acetyl tri-n-butyl citrate; a mixture of extractable plasticizers of at least 95% 1, 2 cyclohexanedicarboxyylic acid diisononyl ester and up to 5 % acetyl tri-n-butyl citrate. The percentages expressed above represent a percentage of the total plasticizer content.

In yet another specific embodiment, the polymeric compositions may include a mixture of extractable plasticizers of about 50% 1, 2 cyclohexanedicarboxyylic acid diisononyyl ester and about 50% of about butyl tri-n-hexyl citrate; a of extractable plasticizers of at least 75% 1, 2 cyclohexanedicarboxyylic acid diisononyyl ester and up to 25% of about butyl tri-n-hexyl citrate; a mixture of extractable plasticizers of at least 90 % 1, 2 cyclohexanedicarboxyylic acid diisononyyl ester and up to 10% of about butyl tri-n-hexyl citrate.

Still other more specific embodiments of plastic compositions suitable for use in blood or blood component storage containers are compositions that include a mixture of extractable plasticizers of at least 80% di-2-ethylhexyl terephthalate ester and up to 20% acetyl tri-n-butyl citrate; a mixture of plasticizers of at least 85% di-ethylhexyl terephthalate ester and up to 15% acetyl tri-n-butyl citrate; a mixture of plasticizers of at least 90% di-ethyl hexyl terephthalate ester and up to 10 % acetyl tri-n-butyl citrate; a mixture of plasticizers of at least 95% di-ethyl hexyl terephthalate ester and up to 5% acetyl tri-n-butyl citrate. The percentages expressed above represent a percentage of the total plasticizer content.

More specific embodiments of polymeric compositions that include other mixed plasticizer combinations include polymeric compositions that include a mixture of 1, 2 cyclohexanedicarboxyylic acid diisononyyl ester and di-2-ethylhexyl terephthalate ester. Further embodiments of still other mixed plasticizer systems that may be incorporated into polymeric compositions include a mixture of di-2-ethylhexyl terephthalate ester and acetyl tri-n-hexyl citrate

Other mixtures of di-2-ethylhexyl terephthalate ester with a citrate ester may include a mixture of di-2-ethylhexyl terephthalate ester and butyl tri-n-hexyl citrate;

As noted above, several of the above-described mixed plasticizer systems were tested in accordance with the procedures of the previously described Hemolysis Test Tube Study. The results are set forth in Figs. 5 and 6.

In addition to the polymer (PVC) and the mixture of plasticizer described above, the polymeric compositions used to make blood storage containers and described above may further include other additives such as stabilizers and co-stabilizers. Examples of stabilizers include epoxidized vegetable oils such as epoxidized soybean oil and epoxidized linseed oil. These epoxidized vegetable oils may also provide a plasticizing effect to the polymer and are generally non-leaching or marginally leaching. Other co-stabilizers may include metal stearates such as calcium stearates, zinc stearates, magnesium stearates which act as lubricants and aid in the processing of the polymeric materials. Epoxidized vegetable oils may be present in the polymeric compositions described above in an amount of 1-10%, by weight of the composition. More particularly, epoxidized vegetable oils may be present in an amount of 3-7%, by weight. The metal stearates may be present in any of the formulation in an amount of 0.1%-0.6%, by weight, of the overall composition.

Accordingly, in one specific, non-limiting formulation, the polymeric composition may include the following:

| | 50/50 | 75/25 | 90/10 |
|---|---|---|---|
| Material | E1 | E2 | E3 |
| | phr | phr | phr |
| PVC | 100 | 100 | 100 |
| B6 Citrate (BTHC - butyryl tri-n-hexyl citrate) | 29 | 14.5 | 6 |
| DINCH | 29 | 43.5 | 52 |
| ESO | 10 | 10 | 10 |
| CaZn stearate | 0.2 | 0.2 | 0.2 |
| Totals | 168.2 | 168.2 | 168.2 |

Other specific, non-limiting formulations include the following:

| | | | | |
|---|---|---|---|---|
| PVC | 100 | 100 | 100 | 100 |
| DINCH | 48.3 | 50.4 | 52.1 | 54.6 |
| ATBC | 10.6 | 8.9 | 7.1 | 5.4 |
| ESO | 6 | 6 | 6 | 6 |
| ZN St | 0.3 | 0.3 | 0.3 | 0.3 |
| ATBC ratio | 0.180 | 0.150 | 0.120 | 0.090 |
| Total phr | | | | |

Still further specific, non-limiting formulations include:

| | E1 | E2 | E3 | E4 |
|---|---|---|---|---|
| PVC | 100 | 100 | 100 | 100 |
| DEHT | 43.6 | 45.6 | 47 | 49.1 |
| ATBC | 11.6 | 10 | 8.3 | 6.7 |
| ESO | 6 | 6 | 6 | 6 |
| ZN St | 0.3 | 0.3 | 0.3 | 0.3 |
| ATBC ratio | 0.210 | 0.180 | 0.150 | 0.120 |

## Claims

1. A flexible blood storage container comprising a pair of walls defining an interior chamber and at least one access port, said container made of a polymeric material comprising polyvinyl chloride and a mixture of least two extractable plasticizers comprising at least 95% 1, 2 cyclohexane dicarboxylic acid diisononyl ester and up to 5 % acetyl tri-n-butyl citrate of the at least two plasticizer mixture.

2. The flexible blood storage container of Claim 1 wherein said polymeric material further comprises a stabilizer comprising epoxidized vegetable oil and optionally a co-stabilizer comprising a metal stearate.

3. A flexible blood storage container comprising a pair of walls defining an interior chamber and at least one access port, said container made of a polymeric material comprising polyvinyl chloride and at mixture of least two extractable plasticizers comprising at least 75% di-2-ethylhexyl terephthalate ester and up to 25% acetyl tri-n-butyl citrate of the plasticizer mixture.

4. The flexible blood storage container of Claim 3 wherein said mixture of extractable plasticizers comprises at least 80% di-2-ethylhexyl terephthalate ester and up to 20% acetyl tri-n-butyl citrate.

5. The flexible blood storage container of Claim 3 wherein said mixture of plasticizers comprises at least 85% di-ethylhexyl terephthalate ester and up to 15% acetyl tri-n-butyl citrate.

6. The flexible blood storage container of Claim 3 wherein said mixture of plasticizers comprises at least 90% di-ethyl hexyl terephthalate ester and up to 10 % acetyl tri-n-butyl citrate.

7. The flexible, blood storage container of Claim 3 wherein said mixture of plasticizers comprises at least 95% di-ethyl hexyl terephthalate ester and up to 5% acetyl tri-n-butyl citrate.

8. The flexible blood storage container of any one of Claims 3 through 7 wherein said polymeric material further comprises a stabilizer comprising epoxidized vegetable oil and optionally a co-stabilizer comprising a metal stearate.

9. A flexible blood storage container comprising a pair of walls defining an interior chamber and at least one access port, said container made of a polymeric material comprising polyvinyl chloride and at mixture of least two extractable plasticizers comprising di-2-ethylhexyl terephthalate ester and acetyl tri-n-hexyl citrate.

10. The flexible blood storage container of Claim 9, wherein said mixture of plasticizers comprises at least 90% di-ethyl hexyl terephthalate ester and up to 10 % acetyl tri-n-hexyl citrate.

11. The flexible blood storage container of any one of Claims 9 through 10 wherein said polymeric material further comprises a stabilizer comprising epoxidized vegetable oil and optionally a co-stabilizer comprising a metal stearate.

## Patentansprüche

1. Flexibler Blutlagerbehälter, umfassend ein Paar Wände, die eine innere Kammer definieren, und zumindest eine Zugangsstelle, wobei der Behälter aus einem polymeren Material hergestellt ist, das Polyvinylchlorid und ein Gemisch aus zumindest zwei extrahierbaren Weichmachern umfasst, wobei das Gemisch aus zumindest zwei Weichmachern zumindest 95% 1,2-Cyclohexandicarbonsäure-diisononylester und bis zu 5% Acetyl-tri-n-butylcitrat umfasst.

2. Flexibler Blutlagerbehälter nach Anspruch 1, wobei das polymere Material ferner einen Stabilisator umfasst, der epoxidiertes Pflanzenöl umfasst, und optional einen Co-Stabilisator, der ein Metallstearat umfasst.

3. Flexibler Blutlagerbehälter, umfassend ein Paar Wände, die eine innere Kammer definieren, und zumindest eine Zugangsstelle, wobei der Behälter aus einem polymeren Material hergestellt ist, das Polyvinylchlorid und ein Gemisch aus zumindest zwei extrahierbaren Weichmachern umfasst, wobei das Weichmachergemisch zumindest 75% Di-2-ethylhexyl-terephthalatester und bis zu 25% Acetyl-tri-n-butylcitrat umfasst.

4. Flexibler Blutlagerbehälter nach Anspruch 3, wobei das Gemisch aus extrahierbaren Weichmachern zumindest 80% Di-2-ethylhexyl-terephthalatester und bis zu 20% Acetyl-tri-n-butylcitrat umfasst.

5. Flexibler Blutlagerbehälter nach Anspruch 3, wobei das Gemisch aus Weichmachern zumindest 85% Di-ethylhexyl-terephthalatester und bis zu 15% Acetyl-tri-n-butylcitrat umfasst.

6. Flexibler Blutlagerbehälter nach Anspruch 3, wobei das Gemisch aus Weichmachern zumindest 90% Di-ethylhexyl-terephthalatester und bis zu 10% Acetyl-tri-n-butylcitrat umfasst.

7. Flexibler Blutlagerbehälter nach Anspruch 3, wobei das Gemisch aus Weichmachern zumindest 95% Di-ethylhexyl-terephthalatester und bis zu 5% Acetyl-tri-n-butylcitrat umfasst.

8. Flexibler Blutlagerbehälter nach einem der Ansprüche 3 bis 7, wobei das polymere Material ferner einen Stabilisator umfasst, der epoxidiertes Pflanzenöl umfasst, und optional einen Co-Stabilisator, der ein Metallstearat umfasst.

9. Flexibler Blutlagerbehälter, umfassend ein Paar Wände, die eine innere Kammer definieren, und zumindest eine Zugangsstelle, wobei der Behälter aus einem polymeren Material hergestellt ist, das Polyvinylchlorid und ein Gemisch aus zumindest zwei extrahierbaren Weichmachern umfasst, wobei das Gemisch Di-2-ethylhexyl-terephthalatester und Acetyl-tri-n-hexylcitrat umfasst.

10. Flexibler Blutlagerbehälter nach Anspruch 9, wobei das Gemisch aus Weichmachern zumindest 90% Di-ethylhexyl-terephthalatester und bis zu 10% Acetyl-tri-n-hexylcitrat umfasst.

11. Flexibler Blutlagerbehälter nach einem der Ansprüche 9 bis 10, wobei das polymere Material ferner einen Stabilisator, der epoxidiertes Pflanzenöl umfasst, und optional einen Co-Stabilisator umfasst, der ein Metallstearat umfasst.

## Revendications

1. Récipient flexible de stockage de sang comprenant une paire de parois définissant une chambre intérieure et au moins un port d'accès, ledit récipient étant fabriqué en un matériau polymérique comprenant du polychlorure de vinyle et un mélange d'au moins deux plastifiants extractibles comprenant au moins 95% de 1,2-cyclohexane dicarboxylate de diisononyle et jusqu'à 5% de citrate d'acétyl tri-n-butyle du mélange d'au moins deux plastifiants.

2. Récipient flexible de stockage de sang selon la revendication 1, dans lequel ledit matériau polymérique comprend en outre un stabilisant comprenant de l'huile végétale époxydée et, facultativement, un co-stabilisant comprenant un stéarate métallique.

3. Récipient flexible de stockage de sang comprenant une paire de parois définissant une chambre intérieure et au moins un port d'accès, ledit récipient étant fabriqué en un matériau polymérique comprenant du polychlorure de vinyle et un mélange d'au moins deux plastifiants extractibles comprenant au moins 75% d'ester de téréphtalate de di-2-éthylhexyle et jusqu'à 25% de citrate d'acétyl tri-n-butyle du mélange de plastifiants.

4. Récipient flexible de stockage de sang selon la revendication 3, dans lequel ledit mélange de plastifiants extractibles comprend au moins 80% d'ester de téréphtalate de di-2-éthylhexyle et jusqu'à 20% de citrate d'acétyl tri-n-butyle.

5. Récipient flexible de stockage de sang selon la revendication 3, dans lequel ledit mélange de plastifiants comprend au moins 85% d'ester de téréphtalate de di-éthylhexyle et jusqu'à 15% de citrate d'acétyl tri-n-butyle.

6. Récipient flexible de stockage de sang selon la revendication 3, dans lequel ledit mélange de plastifiants comprend au moins 90% d'ester de téréphtalate de di-éthylhexyle et jusqu'à 10% de citrate d'acétyl tri-n-butyle.

7. Récipient flexible de stockage de sang selon la revendication 3, dans lequel ledit mélange de plastifiants comprend au moins 95% d'ester de téréphtalate de di-éthylhexyle et jusqu'à 5% de citrate d'acétyl tri-n-butyle.

8. Récipient flexible de stockage de sang selon l'une quelconque des revendications 3 à 7, dans lequel ledit matériau polymérique comprend en outre un stabilisant comprenant de l'huile végétale époxydée et, facultativement, un co-stabilisant comprenant un stéarate métallique.

9. Récipient flexible de stockage de sang comprenant une paire de parois définissant une chambre intérieure et au moins un port d'accès, ledit récipient étant fabriqué en un matériau polymérique comprenant du polychlorure de vinyle et un mélange d'au moins deux plastifiants extractibles comprenant de l'ester de téréphtalate de di-2-éthylhexyle et du citrate d'acétyl tri-n-hexyle.

10. Récipient flexible de stockage de sang selon la revendication 9, dans lequel ledit mélange de plastifiants comprend au moins 90% d'ester de téréphtalate de di-éthylhexyle et jusqu'à 10% de citrate d'acétyl tri-n-hexyle.

11. Récipient flexible de stockage de sang selon l'une quelconque des revendications 9 à 10, dans lequel ledit matériau polymérique comprend en outre un stabilisant comprenant de l'huile végétale époxydée et, facultativement, un co-stabilisant comprenant un stéarate métallique.
